# EUROPEAN PATENT SPECIFICATION

(11) **EP 1 182 800 B1**
(45) Date of publication and mention of the grant of the patent: **15.04.2009**
(21) Application number: 00118353.2
(22) Date of filing: 24.08.2000
(51) Int. Cl.: H04B 7/08

(54) **Antenna diversity receiving system**
Empfangssystem mit Antennendiversität
Système de réception à diversité d'antenne

(43) Date of publication of application: 27.02.2002
(73) Proprietor: Continental Automotive GmbH, 30165 Hannover (DE); Laird Technologies GmbH, 31135 Hildesheim (DE)
(72) Inventor: Meijer, Pieter, 5616 CK Eindhoven (NL); Wegner, Peter, 31167 Bockenem (DE)

(56) References cited:
- EP-A- 0 274 157
- EP-A- 0 768 764
- EP-A- 0 792 031
- DE-A- 4 204 490
- US-A- 4 499 606
- US-A- 5 826 179

## Description

The invention relates to an antenna diversity receiving system comprising an antenna device including a plurality of FM antennas as well as controllable switching means for sequentially switching through one of said plurality of FM antennas via an antenna cable to a receiver upon reception of a switching control signal, the receiver comprising a multipath detector coupled to a pulse generator for generating a pulse signal at the detection of multipath interference. Such a receiver is on itself known, e.g. from European Patent Application number 0 792 031 and is specifically suited to be used in vehicles.

The reception of a wanted RF broadcast transmitter signal may be disturbed or otherwise deteriorated by various phenomena, such as multipath reception and/or adjacent channel interferences. In general, multipath reception is caused by signal reflections at and/or against environmental physical obstacles, such as mountains, trees, buildings, fences and the like. Due to such signal reflections an RF broadcast signal may arrive at a certain reception location through various different signal paths, i.e. in various different amplitude and phase conditions. The summation of these multipath signals at the antenna of the receiver results in unpredictable signal amplitude and/or phase distorsions, most often effectuating in part or complete cancellation of the useful RF reception signal. These signal cancellations, hereinafter also being referred to as signal dips, strongly depend on the RF carrier frequency of the received RF broadcasting signal and on the location of reception.

Said signal dips severely deteriorate the wanted RF broadcasting signal and therewith also the overall signal reception quality. However, a relatively small shift in the position of the antenna receiving the wanted RF broadcasting signal could already suffice to strongly improve said signal reception quality. This solution is used in antenna diversity receiving systems of the above type to avoid reception of multipath distorted RF signals. In such antenna diversity receivers use is made of two or more mutually apart placed antennas being coupled to an RF input of a receiver. Only that antenna is actually connected to the RF receiver input, having best local receiving conditions with respect to the other antenna(s). This antenna, hereinafter also being referred to as actual antenna, will be effective in the reception and supply of the wanted RF broadcasting signal through the antenna cable to the receiver as long as the multipath distortion at this actual antenna remains smaller than a certain predetermined multipath threshold level. As soon as the received multipath distortion exceeds said multipath threshold level, a change over in the RF signal supply to the receiver from this actual antenna to another antenna being then positioned at a location with better receiving conditions, is initiated. With a proper control of the controllable switching means, the receiver is continuously optimised for minimum multipath reception.

To initiate a proper switching operation resulting in a switch over of RF broadcast signal reception from one antenna to a subsequent antenna, the known antenna diversity receiving system comprises a multipath detector an output thereof being coupled to a pulse generator for generating a pulse signal at the detection of multipath interference. This pulse signal is being supplied through the antenna cable to said controllable switching means to initiate the above antenna switching operation. This switching operation is repeated if the RF broadcast signal received at said subsequent antenna, then being the actual antenna, also appears to be affected by multipath distortion exceeding said multipath threshold level, until an RF broadcast signal is actually received which is not affected by such multipath distortion.

The antenna cable therewith carries RF broadcast signals (from the antenna device to the receiver) as well as pulse signals (in opposite direction). These signals mutually interfere, in particular the pulse signals affect the useful FM RF broadcast signals and may become noticeable in the reproduced audiosignals.

It is a first object of the invention to simplify the above antenna diversity receiving system allowing for a costeffective implementation thereof, while providing optimal signal reception.

It is a second object of the invention in an antenna diversity receiving system using a single antenna cable for the transmission of both useful FM RF broadcast signals and pulsating switching control signals to secure an accurately detection of these pulsating switching control signals and to prevent these from disturbing the processing of the useful FM RF broadcast signals in the receiver.

It is a third object of the invention to allow for the reception of various types of RF broadcast signals, in particular both AM and FM RF broadcast signals while preventing mutual interference between the various signals passing one and the same antenna cable, from occurring.

An antenna diversity receiving system comprising an antenna device including a plurality of FM antennas as well as controllable switching means for sequentially switching through one of said plurality of FM antennas via an antenna cable to a receiver upon reception of a switching control signal, the receiver comprising a multipath detector coupled to a pulse generator for generating a pulse signal at the detection of multipath interference according to the invention is therefore characterised by a pulse shaper following the pulse generator to convert the pulse signal of the pulse generator into a pulse signal pair comprising a first signal pulse followed by a second signal pulse having a signal polarity opposite to the signal polarity of the first signal pulse, said pulse signal pair having a waveform varying symmetrically around a reference level and being supplied through the antenna cable to the antenna device.

By applying the measure according to the invention the pulse signals passing the antenna cable have no DC signal energy, therewith preventing to cause any DC level variation, including DC variations of a detection threshold level. This stabilises the accuracy in the detection of those pulse signals. Furthermore, the spectral distribution of signal energy of such pulse signals prevents these pulse signals from becoming noticeable in the reproduced audiosignals.

To simplify implementation of the pulse shaper, the waveform of the pulse signal of the pulse generator is chosen substantially rectangular, varying during a first signal transient from a first signal level to a second signal level and during a second signal transient from said second signal level to said first signal level, the pulse shaper comprising signal differentiating means for differentiating the pulse signal of the pulse generator to form first and second pulse spikes having mutually opposite signal polarity occurring substantially during said first and second signal transients. These signal differentiating means may preferably comprise a first inductance coupled between an output resistance of the pulse generator and a DC supply voltage.

A preferred embodiment of the antenna diversity receiving system according to the invention is characterised by the pulse shaper being coupled to the antenna cable through a first FM blocking filter providing for a signal suppression within the frequency range of the FM RF broadcast frequency band. This strongly reduces pulse signal energy within the useful FM RF broadcast frequency band at the antenna cable, and smoothens the form of the pulse signal pair into a more or less sinusoidal waveform.

A cost effective implementation of said first FM blocking filter may comprise a first parallel LC circuit having a resonance frequency substantially corresponding to the center frequency within the frequency range of the FM RF broadcast frequency band.

Another preferred embodiment of an antenna diversity receiving system according to the invention, providing effective detection of the above pulse signal pairs, is characterised by the antenna device comprising a control signal detector, an input thereof being coupled to the antenna cable for supplying thereto pulse signal pairs from the pulse shaper and an output thereof being coupled to a control input of said controllable switching means, said control signal detector comprising a threshold circuit providing a threshold level and generating a switching control signal pulse for the controllable switching means when the pulse signal pair occurring at the input of the control signal detector exceeds said threshold level. To simplify accurate antenna switching in consecutive order, the antenna device preferably comprises a counting device coupled between the control signal detector and the control input of said controllable switching means for counting the switching control signal pulses in a cycle comprising a number of values corresponding to the number of fixed antennas of the antenna device.

To prevent leakage of signals within the frequency range of the FM RF broadcast frequency band via the control signal path of the antenna device, a second FM blocking filter is provided therein, effecting a signal suppression within the frequency range of the FM RF broadcast frequency band. Preferably, the second FM blocking filter comprises a second parallel LC circuit having a resonance frequency substantially corresponding to the center frequency within the frequency range of the FM RF broadcast frequency band.

A preferred embodiment of an antenna diversity receiving system according to the invention, is characterised by the antenna device comprising a second inductance being DC coupled through the antenna cable in parallel to said first inductance, said second inductance being coupled between an input of the control signal detector and a reference voltage. The first and second inductances form part of the above differentiating means of the pulse shaper and are given inductance values with regard to the output resistance of the pulse generator to properly differentiate the pulse signal of the pulse generator.

Another preferred embodiment of an antenna diversity receiving system according to the invention, is characterised by an AM antenna being coupled via AM amplifying means to the antenna cable and by AM signal compensation means for compensating AM signals occurring at a first input by AM signals occurring at a second input thereof, said first and second input being respectively coupled to the antenna cable and an output of said amplifying means, an output of said AM signal compensation means being coupled to said controllable switching means. This measure allows for the reception of RF AM broadcast signals, while preventing amplitude variations due to such RF AM broadcast signals from being detected as switching control signals. False antenna switching operations are therewith effectively avoided.

Preferably, the output of the AM signal compensation means is being coupled through the control signal detector to said controllable switching means.

To increase the accuracy in compensation, the AM amplifying means is coupled through an inverter stage to the second input of the AM signal compensation means, the AM signal compensation means comprising an adder circuit for an addition of the signals at the first and second inputs of the AM signal compensation means. Alternatively, the AM amplifying means may be constituted by a balanced AM amplifier having non-inverting and inverting output stages of a balanced AM amplifier being respectively coupled to the first and the second input of the AM signal compensation means .

The accuracy of compensation may be further increased by first high pass filter means coupled between the output of the first AM signal amplifier and the antenna cable and second high pass filter means coupled between the output of the second AM signal amplifier and the second input of the AM signal compensation means for a high pass selection of the AM RF frequency band.

These and further aspects and advantages of the invention will be discussed more in detail hereinafter with reference to the disclosure of preferred embodiments, and in particular with reference to the appended Figures showing a preferred embodiment of a receiver according to the invention.

Herein, it is shown in:
Figure 1 a preferred embodiment of an antenna diversity receiving system according to the invention comprising an antenna device coupled via an antenna cable to a receiver;
Figure 2 a preferred embodiment of a multipath detector and a pulse generator for use in the antenna diversity receiving system of Figure 1;
Figure 3 A-B time plots of the output signals of the multipath detector of Figure 1;
Figure 4 a-c time plots of output signals of respectively the multipath detector, the pulse generator and a pulse shaper following said pulse generator of Figure 1.

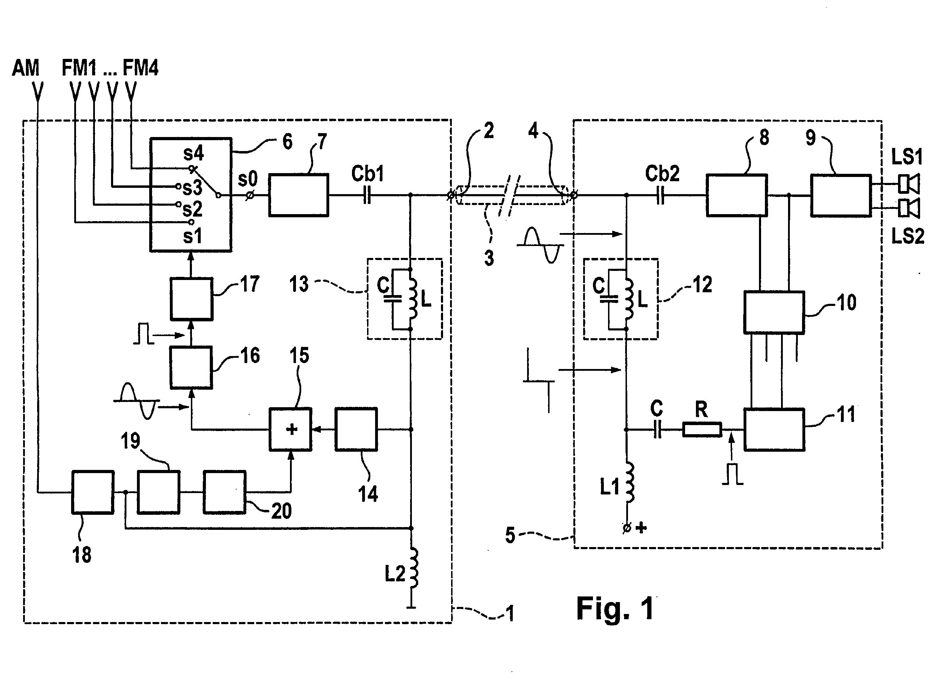

Figure 1 shows a preferred embodiment of an antenna diversity receiving system according to the invention for use in cars comprising an antenna diversity box 1, inputs thereof being connected to an antenna system having a single AM antenna AM and FM antennas FM1-FM4. In contrast with the antennas used in the above cited prior art reference, these AM and FM antennas AM and FM1-FM4, each have a fixed predetermined areal characteric. In a practical embodiment, the fixed predetermined areal characterics of the FM antennas FM1-FM4 are chosen to mutually differ such, that they each provide a maximum areal gain factor in mutually different directions. Preferably, the mutually differing angles of maximum areal gain are chosen to cover the full angular area, in which proper reception of an RF FM broacast signal is most likely to occur. An output of the antenna diversity box 1 is coupled via a first antenna cable terminal 2, an antenna cable 3 and a second antenna cable terminal 4 to a receiver 5. When used in a car, the antenna diversity box 1 is mounted close to the antenna system, e.g. an antenna structure integrated in the rear window of a car, this combination of antenna diversity box and antenna system hereinafter also being referred to as "antenna device". The receiver 5 may be mounted elsewhere in the car, e.g. in a front dashboard panel. The antenna diversity box 1 includes controllable switching means 6 having antenna terminals s1-s4 being respectively coupled to FM antennas FM1-FM4 and means to switch through one of said FM antennas FM1-FM4, e.g. FM antenna FM4, to a switch output terminal s0. Upon reception of a switching control signal at a switching control input ci of the controllable switching means 6, said one FM antenna is disconnected from the switch output terminal s0, after which another FM antenna, e.g. the FM antenna following in subsequent order said one FM antenna - in the given example FM antenna FM1 - is switched through to the switch output terminal s0. The FM antenna now actually supplying a broadband RF FM broadcast signal to the switch output terminal s0, hereinafter also referred to as actual FM antenna, is in position somewhat shifted with regard to the former actual FM antenna, and also different with regard to its antenna gain characteristic. This may very well improve the signal quality of the broadband RF FM broadcast signal at the switch output terminal s0. The switch output terminal s0 is coupled to a broadband RF FM bandfilter 7 providing broadband selection and/or amplification of the received broadband RF FM signal and supplies the same through a DC blocking capacitor Cb1 and the antenna cable terminal 2 to the antenna cable 3, for which in practice a coax type cable is used. The AM antenna AM is being coupled via the antenna diversity box 1 to the first antenna cable terminal 2, as will be explained in more detail hereinafter.

The second antenna cable terminal 4 constitutes an RF input for the receiver 5 and is followed via a DC blocking capacitor Cb2 by an AM/FM tuner 8. The broadband RF AM and FM signals passing the antenne cable 6 therewith arrive at the AM/FM tuner 8, which selects and demodulates a wanted AM RF signal into a baseband AM modulation signal, respectively a wanted FM RF signal into an FM IF signal followed by a demodulation of the FM IF signal into an FM stereomultiplex signal. The output signal of the AM/FM tuner 8 comprising said baseband AM modulation signal or said FM stereomultiplex signal, as the case may be, is supplied to a signal processor 9, in which these signals are further processed into a baseband audiosignal, respectively, into left and right baseband stereosignals. Reproduction of these signals takes place in first and second loudspeakers LS1 and LS2.

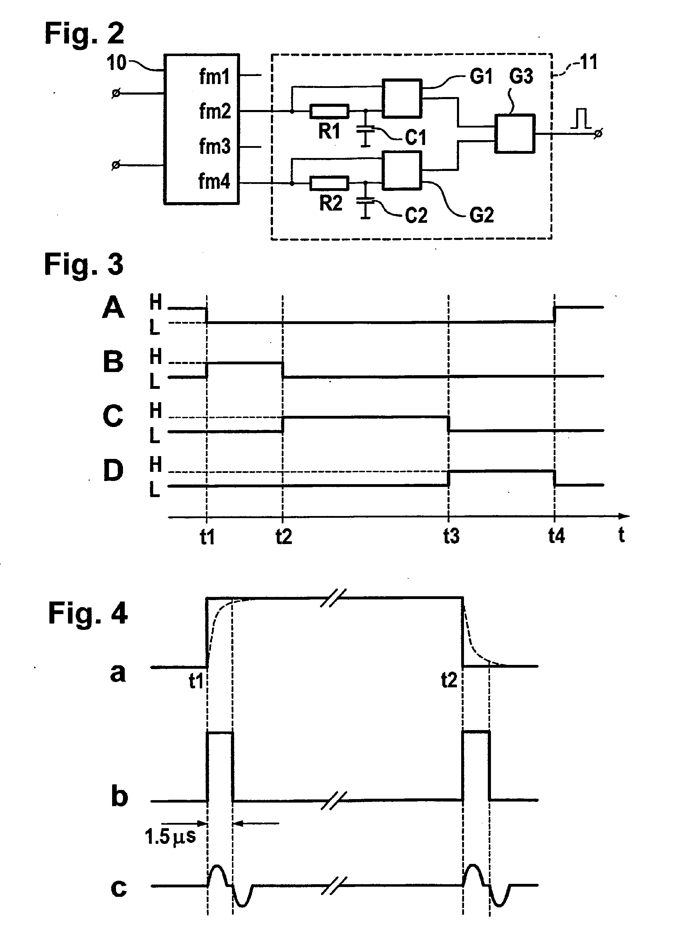

The receiver 5 also comprises a multipath detector 10 being coupled to the AM/FM tuner 8 to receive therefrom a signal indicative for the level of the FM IF signal, hereinafter also referred to as IF level signal, as well as the above tuner output signal comprising the FM stereomultiplex signal. In the embodiment shown, the multipath detector 10 is implemented with an IC type TEA 6101, which is connected to a pulse generator 11. The occurrence of an amplitude dip in the FM IF signal coinciding with distorsion in a frequency range of the tuner output signal above the frequency range of the FM stereomultiplex signal, is indicative for the occurrence of multipath distorsion, in which event the multipath detector 10 triggers the pulse generator 11 to generate a pulse signal of a standard rectangular waveform, varying during a first signal transient from a first signal level to a second signal level and during a second signal transient from said second signal level to said first signal level. The operation and function of the multipath detector 10 and the pulse generator 11 shall be described in more detail with reference to Figures 3 and 4.

An output of the pulse generator 11 is coupled to a pulse shaper comprising signal differentiating means RLC for differentiating the standard rectangular pulse signal waveform of the pulse generator to convert said rectangular pulse signal waveform into a pulse signal pair comprising a first signal pulse, or a first pulse spike, followed by a second signal pulse, or a second pulse spike, having a signal polarity opposite to the signal polarity of the first signal pulse, and occurring substantially during said first and second signal transients. The overall waveform of the pulse signal pair therewith varies symmetrically around a reference level.

The pulse shaper is coupled to a first FM blocking filter 12 providing for a signal suppression within the frequency range of the FM RF broadcast frequency band. Said first FM blocking filter 12 comprises a first parallel LC circuit having a resonance frequency substantially corresponding to the center frequency within the frequency range of the FM RF broadcast frequency band. This first FM blocking filter 12 strongly reduces the occurrence of pulse signal energy within the useful FM RF broadcast frequency band at the antenna cable, and smoothens the form of the pulse signal pair. The pulse signals at the second antenna cable terminal 4, i.e. at the RF input of the receiver 5 are therewith prevented from becoming noticeable in the reproduced audiosignals. Furthermore, the pulse signals passing the antenna cable 3 to the antenna diversity box 1, have no DC signal energy, therewith preventing to cause any DC level variation, including DC variations of a detection threshold level. Apart therefrom, the mutually opposite polarities of the first and second signal pulses prevent any parasitic DC level integration at p-n diode junctions of transistors used in the various circuitry of the antenna device from occurring. This stabilises the accuracy in the detection of those pulse signals.

A bias voltage is supplied through a first inductance L1 and an inductance of the first FM blocking filter 12 to said second antenna cable terminal 4. In the antenna diversity box 1, the first antenna cable terminal 2 is DC coupled through an inductance of a second FM blocking filter 13 to a mass connected a second inductance L2. Said bias voltage is used to bias both antenna diversity box 1 and receiver 5.

The abovementioned signal differentiating means RLC for differentiating the standard rectangular pulse signal waveform of the pulse generator 11 includes a resistor R coupling the output of the pulse generator 11 via a capacitor C to the common connection between the first inductance L1 and the first FM blocking filter 12. Via said inductance of the first FM blocking filter 12, the antenna cable 3, the inductance of the second FM blocking filter 13, the first inductance L1 is connected in parallel to the second inductance L2, both first and second inductances L1 and L2 therewith being effective with the resistor R at the output of the pulse generator 11 and the capacitor C in the differentiation of the standard rectangular pulse signal waveform of the pulse generator 11. Said resistor R may be constituted by the output resistance of the pulse generator 11 itself. The values of the various elements (R, C, L1 and L2) are chosen to properly obtain the above pulse signal pair from the standard rectangular pulse signal waveform of the pulse generator 11.

The second FM blocking filter 13 is to prevent leakage of signals at the first antenna cable terminal 2 within the frequency range of the FM RF broadcast frequency band via a control signal path of the antenna device. For this purpose, the second FM blocking filter 13 is designed to effect a signal suppression within the frequency range of the FM RF broadcast frequency band. Preferably, the second FM blocking filter therefore comprises a second parallel LC circuit having a resonance frequency substantially corresponding to the center frequency within the frequency range of the FM RF broadcast frequency band.

An output of the second FM blocking filter 13 is coupled via subsequently first high pass filter means 14 and AM signal compensation means 15 to a control signal detector 16 to detect the occurrence of a pulse signal pair. For an effective detection of the above pulse signal pairs, the control signal detector 16 comprises a threshold circuit providing a threshold level and generates a switching control signal pulse when the pulse signal pair occurring at the input of the control signal detector 16 exceeds said threshold level. These switching control signal pulses are therewith indicative for the occurrence of a multipath distorsion in the received RF FM signal.

To simplify accurate antenna switching in a predetermined sequential order, the antenna device preferably comprises a counting device 17 coupled between the control signal detector 16 and the control input ci of said controllable switching means 6. The output value of the counting device 17 varies monotonously with each switching control signal pulse of the control signal detector 16 within a counting cycle, the number of values within one cycle corresponding to the number of fixed antennas FM1-FM4 of the antenna device. The use of such counting device introduces a degree of freedom in the choice of an eventual counting cycle of the pulse generator 11. The counting device 17 may preferably comprise a type Johnson counter.

The AM antenna AM is coupled via AM amplifying means 18 and the common connection between the second inductance L2 and the second FM blocking filter 13 to the antenna cable 3. The second FM blocking filter strongly reduces any distorsion or other unwanted signals received by the AM antenna AM and occurring within the FM RF frequency range from arriving via the antenna cable 3 at the RF input of the AM/FM tuner 8.

However, the RF AM broadcast signals arriving at the first antenna cable terminal 2 may strongly vary and such amplitude variations could easily be mistaken for multipath indicative pulse signal pairs. To prevent such amplitude variations from initiating false antenna switching operations the output signals of the AM amplifying means 18 are being supplied via the common connection between the second inductance L2 and the second FM blocking filter 13 and the first high pass bandfilter 14 to a first input of the AM signal compensation means 15 and via an inverter 19 inverting the polarity of the output signals of the AM amplifying means 18 and a second high pass bandfilter 20 to a second input of the AM signal compensation means 15. The cut off frequency of said first and second high pass bandfilters 14 and 20 are chosen to correspond to the lower limit frequency of the AM RF broadcast frequency band, i.e. 144 Khz. The first and second high pass bandfilters 14 and 20 therewith select the broadband RF AM broadcast signals and do not hinder passage of pulse signal pairs from the output of the second FM blocking filter 13 to the AM signal compensation means 15. The AM signal compensation means 15 provide for a cancellation of broadband AM RF signals supplied to its first and second inputs and may be constituted by an adder or a subtractor. In the embodiment shown signal polarity inversion is carried in the inverter 19, allowing to use an adder for the AM signal compensation means 15. Such signal polarity inversion may alternatively be obtained, by using a balanced AM amplifier having non-inverting and inverting output stages (not shown). Another alternative solution is to use a subtractor for the AM signal compensation means 15, which removes the necessity for a prior signal polarity inversion. The compensation of AM RF broadcast signals in the input signal path of the control signal detector 16 allows for a continuous reception of RF AM broadcast signals at the RF input of the AM/FM tuner 8, while preventing amplitude variations due to such RF AM broadcast signals from being detected as switching control signals. False antenna switching operations are therewith effectively avoided.

The positioning of the first high pass filter 14 in the signal path between the second FM blocking filter 13 and the AM signal compensation means 15 allows for a simple DC bias provision for the AM amplifier 18.

Figure 2 shows a preferred embodiment of a multipath detector 10 being implemented with Philips' IC TEA6101and a pulse generator 11 for use in the antenna diversity receiving system of Figure 1. This IC is provided with 4 pin connectors fm1, fm2, fm3, fm4, an example of the binary signals occurring at these pin connectors fm1, fm2, fm3, fm4 upon detection of multipath distorsion exceeding a certain predetermined multipath threshold level occurring at sequential points in time t1-t4 are respectively shown in signal plots A, B, C and D of Figure 3. In time, only one of these binary signals has a high output voltage or digital "1" value. During such high output voltage or digital "1" value, the corresponding antenna FM1, FM2, FM3 or FM4 is to be switched through via the antenna cable 3 to the RF receiver input 4. The description of the function of the Philips' IC TEA6101 given sofar is sufficient for a proper understanding of the invention. For further details reference is made to the relevant Philips IC Data Handbook of this IC.

The pin connectors fm2 and fm4 are coupled to exclusive OR gates G1 and G2 of the pulse generator 11, respectively, directly as well as through delay elements R1C1 and R2C2, respectively. Outputs of the exclusive OR gates G1 and G2 are coupled to inputs of a non-exclusive OR gate G3, which is connected to the pulse shaper comprising the abovementioned differentiating means RLC (the inductance L being formed by the first and second inductances L1 and L2 in parallel). The delay elements R1C1 and R2C2 each comprise an RC circuit delaying the supply of the digital value supplied at the pin connectors fm2 and fm4 over an RC time constant to one of the inputs of the respective exclusive OR gates G1 and G2. A high or digital "1" value arising at e.g. pin connector fm2 upon detection of a multipath distorsion on a point in time t1, will immediately be supplied to the one input of the exclusive OR gate G1 and some time later at the other input of said exclusive OR gate G1. This results in a pulse shaped signal having a rectangular waveform at the output of said exclusive OR gate G1, the pulsewidth thereof being determined by the RC timeconstant of the delay element R1C1. This is further illustrated in Figure 4, in which signal plots a-c, are shown based on signal plot B of Figure 3, i.e. the binary signal occurring at the pin connector fm2 of the multipath detector 10. In a practical embodiment, the RC timeconstant chosen effectuates a pulsewidth of 1.5 us. as shown in signal plot b of Figure 4. As mentioned above, this pulse signal is differentiated in differentiating means RLC coupled at the output of the pulse generator 11 resulting in a pulse signal pair having first and second spike pulses of mutually opposite polarity. This spike formed pulse signal pair is smoothened by the first FM blocking filter 12 into pulse signal pairs as shown in signal plot c of Figure 4.

The person skilled in the art will recognize alternative embodiments within the ambit of the present invention, the scope of which has justfully been determined by the appended Claims hereinafter. For example, the functions of the multipath detector 10 and the pulse generator 11 may be realised with any multipath detector generating a pulse of standard rectangular waveform, each time the actually received multipath distorsion increases above and/or decreases below a predetermined multipath threshold level, the counting device 6 may have a counting cycle different from the number of pin connectors of the IC TEA 6101, the pulse width may differ from the above chosen value of 1.5 us, the differentiating means may be implemented with an alternative frequency dependent circuit and/or by using a single inductance, and with a proper DC bias circuit for the AM amplifying means 18, the first high pass filter 14 may alternatively be included in the signal path between the AM amplifying means 18 and the second FM blocking filter 13.

## Claims

1. Antenna diversity receiving system comprising an antenna device (1) including a plurality of FM antennas as well as controllable switching means (6) for sequentially switching through one of said plurality of FM antennas via an antenna cable (3) to a receiver (5) upon reception of a switching control signal, the receiver (5) comprising a multipath detector (10) coupled to a pulse generator (11) for generating a pulse signal at the detection of multipath interference, **characterized by** a pulse shaper following the pulse generator (11) to convert the pulse signal of the pulse generator (11) into a pulse signal pair comprising a first signal pulse followed by a second signal pulse having a signal polarity opposite to the signal polarity of the first signal pulse, said pulse signal pair having a waveform varying symmetrically around a reference level and being supplied through the antenna cable (3) to the antenna device (1).

2. Antenna diversity receiving system according to claim 1, **characterized by** the pulse signal of the pulse generator (11) having a standard, substantially rectangular waveform, varying during a first signal transient from a first signal level to a second signal level and during a second signal transient from said second signal level to said first signal level, the pulse shaper comprising signal differentiating means for differentiating the pulse signal of the pulse generator (11) to form first and second pulse spikes having mutually opposite signal polarity occurring substantially during said first and second signal transients.

3. Antenna diversity receiving system according to claim 2, **characterized by** the signal differentiating means comprising a first inductance (L1) coupled between an output resistance of the pulse generator (11) and a reference voltage.

4. Antenna diversity receiving system according to one of claims 1 to 3, **characterized by** the pulse shaper being coupled to the antenna cable (3) through a first FM blocking filter (12) providing for a signal suppression within the frequency range of the FM RF broadcast frequency band.

5. Antenna diversity receiving system according to claim 4, **characterized by** the first FM blocking filter (12) comprising a first parallel LC circuit having a resonance frequency substantially corresponding to the center frequency within the frequency range of the FM RF broadcast frequency band.

6. Antenna diversity receiving system according to one of claims 1 to 5, **characterized by** the antenna device (1) comprising a control signal detector (16), an input thereof being coupled to the antenna cable (3) for supplying thereto pulse signal pairs from the pulse shaper and an output thereof being coupled to a control input of said controllable switching means (6), said control signal detector (16) comprising a threshold circuit providing a threshold level and generating a switching control signal pulse for the controllable switching means (6) when the pulse signal pair occurring at the input of the control signal detector exceeds said threshold level.

7. Antenna diversity receiving system according to claim 6, **characterized by** the antenna device (1) comprising a counting device (17) coupled between the control signal detector (16) and the control input of said controllable switching means (6) having a counting cycle of counting values corresponding to the number of fixed antennas of the antenna device (1).

8. Antenna diversity receiving system according to claim 6 or 7, **characterized in that** the antenna device (1) comprises a second FM blocking filter (13) providing for a signal suppression within the frequency range of the FM RF broadcast frequency band.

9. Antenna diversity receiving system according to claim 8, **characterized by** the second FM blocking filter (13) comprising a second parallel LC circuit having a resonance frequency substantially corresponding to the center frequency within the frequency range of the FM RF broadcast frequency band.

10. Antenna diversity receiving system according to one of claims 3 to 9, **characterized by** the antenna device (1) comprising a second inductance (L2) being DC coupled through the antenna cable (3) in parallel to said first inductance (L1), said second inductance being coupled between an input of the control signal detector (16) and a bias reference voltage.

11. Antenna diversity receiving system according to one of claims 1 to 10, **characterized by** an AM antenna being coupled via the antenna cable (3) to the receiver (5) and by AM signal compensation means (15) for compensating AM signals occurring at a first input of said compensation means (15) by AM signals occurring at a second input thereof, said first and second input being respectively coupled to the antenna cable (3) and the AM antenna, an output thereof being coupled to said controllable switching means (6).

12. Antenna diversity receiving system according to claims 6 and 11, **characterized in that** the output of the AM signal compensation means (15) is being coupled through the control signal detector (16) to said controllable switching means (6).

13. Antenna diversity receiving system according to claim 11 or 12, **characterized in that** an AM amplifying means (18) is further coupled through an inverter stage (19) to the second is coupled between said AM antenna and said antenna cable (3) and input of the AM signal compensation means (15), the AM signal compensation means (15) comprising an adder circuit for an addition of the signals at the first and second inputs of the AM signal compensation means (15).

14. Antenna diversity receiving system according to claim 11 or 12, **characterized in that** an AM amplifying means (18) comprising a balanced amplifier having non-inverting and inverting output stages is coupled between said AM antenna and said antenna cable (3) via said non-inventing output stage and to the second input of said compensation means (15) via said inventing output stage.

15. Antenna diversity receiving system according to one of claims 13 or 14, **characterized by** first high pass filter (14) means coupled between the AM signal amplifier and the first input of the AM signal compensation means (15) and second high pass filter means (20) coupled between the AM signal amplifier of claim 14 on the inventer stage (19) of claim 13 and the second input of the AM signal compensation means (15) for a high pass selection of the AM RF frequency band.

16. Antenna diversity receiving system according to claim 15, **characterized in that** the first high pass filter (14) means is coupled between the common connection of the second FM blocking filter (13) and the second inductance.

17. Antenna diversity receiving system according to one of claims 11 to 16, **characterized in that** each AM and FM antennas have a fixed predetermined areal characteristic.

18. Antenna diversity receiving system according to claim 17, **characterized** the fixed predetermined areal characterics of the FM antennas are chosen to provide a maximum areal gain factor in mutually different directions.

19. Antenna diversity receiving system according to claim +18, **characterized** that the mutually differing directions of maximum areal gain are chosen to cover an angular area, in which proper reception of an RF FM broadcast signal is most likely to occur.

20. Receiver comprising means adapted for use in an antenna diversity receiving system according to one of claims 1 to 19.

21. Antenna device comprising means adapted for use in an antenna diversity receiving system according to one of claims 1 to 19.

## Patentansprüche

1. Empfangssystem mit Antennendiversität, umfassend eine Antenneneinrichtung (1), die mehrere FM-Antennen enthält sowie ein steuerbares Schaltmittel (6) zum sequentiellen Durchschalten einer der mehreren FM-Antennen über ein Antennenkabel (3) zu einem Empfänger (5) beim Empfang eines Schaltsteuersignals, wobei der Empfänger (5) einen Mehrwegedetektor (10) umfasst, der mit einem Impulsgenerator (11) zum Erzeugen eines Impulssignals bei Detektion von Mehrwegestörungen gekoppelt ist, **gekennzeichnet durch** einen Impulsformer, der dem Impulsgenerator (11) folgt, um das Impulssignal des Impulsgenerators (11) in ein Impulssignalpaar umzusetzen, das einen ersten Signalimpuls umfasst, dem ein zweiter Signalimpuls folgt, der eine der Signalpolarität des ersten Signalimpulses entgegengesetzte Signalpolarität aufweist, wobei das Impulssignalpaar eine Wellenform aufweist, die symmetrisch um einen Referenzpegel variiert, und **durch** das Antennenkabel (3) der Antenneneinrichtung (1) zugeführt wird.

2. Empfangssystem mit Antennendiversität nach Anspruch 1, **dadurch gekennzeichnet, dass** das Impulssignal des Impulsgenerators (11) eine standardmäßige im Wesentlichen rechteckige Wellenform aufweist, die während einer ersten Signaltransiente von einem ersten Signalpegel zu einem zweiten Signalpegel und während einer zweiten Signaltransiente von dem zweiten Signalpegel zu dem ersten Signalpegel variiert, wobei der Impulsformer ein Signaldifferenziermittel zum Differenzieren des Impulssignals des Impulsgenerators (11) umfasst, um erste und zweite Impulsspitzen mit einander entgegengesetzter Signalpolarität zu bilden, die im Wesentlichen während der ersten und zweiten Signaltransienten auftreten.

3. Empfangssystem mit Antennendiversität nach Anspruch 2, **dadurch gekennzeichnet, dass** das Signaldifferenziermittel eine zwischen einem Ausgangswiderstand des Impulsgenerators (11) und einer Referenzspannung geschaltete erste Induktivität (L1) umfasst.

4. Empfangssystem mit Antennendiversität nach einem der Ansprüche 1 bis 3, **dadurch gekennzeichnet, dass** der Impulsformer durch ein erstes FM-Sperrfilter (12), das Signalunterdrückung in dem Frequenzbereich des FM-HF-Rundfunkfrequenzbands gewährleistet, mit dem Antennenkabel (3) gekoppelt ist.

5. Empfangssystem mit Antennendiversität nach Anspruch 4, **dadurch gekennzeichnet, dass** das erste FM-Sperrfilter (12) eine erste parallel-LC-Schaltung umfasst, die eine Resonanzfrequenz aufweist, die im Wesentlichen der Mittenfrequenz in dem Frequenzbereich des FM-HF-Rundfunkfrequenzbands entspricht.

6. Empfangssystem mit Antennendiversität nach einem der Ansprüche 1 bis 5, **dadurch gekennzeichnet, dass** die Antenneneinrichtung (1) einen Steuersignaldetektor (16) umfasst, von dem ein Eingang mit dem Antennenkabel (3) gekoppelt ist, um diesem Signalpaare aus dem Impulsformer zuzuführen, und von dem ein Ausgang mit einem Steuereingang des steuerbaren Schaltmittels (6) gekoppelt ist, wobei der Steuersignaldetektor (16) eine Schwellenschaltung umfasst, die einen Schwellenpegel bereitstellt und einen Schaltsteuersignalimpuls für das steuerbare Schaltmittel (6) erzeugt, wenn das an dem Eingang des Steuersignaldetektors auftretende Impulssignalpaar den Schwellenpegel überschreitet.

7. Empfangssystem mit Antennendiversität nach Anspruch 6, **dadurch gekennzeichnet, dass** die Antenneneinrichtung (1) eine zwischen den Steuersignaldetektor (16) und den Steuereingang des steuerbaren Schaltmittels (6) gekoppelte Zähleinrichtung (17) umfasst, die einen Zählzyklus von Zählwerten aufweist, der der Anzahl fester Antennen der Antenneneinrichtung (1) entspricht.

8. Empfangssystem mit Antennendiversität nach Anspruch 6 oder 7, **dadurch gekennzeichnet, dass** die Antenneneinrichtung (1) ein zweites FM-Sperrfilter (13) umfasst, das Signalunterdrückung in dem Frequenzbereich des FM-HF-Rundfunkfrequenzbands gewährleistet.

9. Empfangssystem mit Antennendiversität nach Anspruch 8, **dadurch gekennzeichnet, dass** das zweite FM-Sperrfilter (13) eine zweite Parallel-LC-Schaltung umfasst, die eine Resonanzfrequenz aufweist, die im Wesentlichen der Mittenfrequenz in dem Frequenzbereich des FM-HF-Rundfunkfrequenzbands entspricht.

10. Empfangssystem mit Antennendiversität nach einem der Ansprüche 3 bis 9, **dadurch gekennzeichnet, dass** die Antenneneinrichtung (1) eine zweite Induktivität (L2) umfasst, die durch das Antennenkabel (3) parallel zu der ersten Induktivität (L1) gleichstromgeschaltet wird, wobei die zweite Induktivität zwischen einem Eingang des Steuersignaldetektors (16) und einer Bias-Referenzspannung geschaltet wird.

11. Empfangssystem mit Antennendiversität nach einem der Ansprüche 1 bis 10, **gekennzeichnet durch** eine AM-Antenne, die über das Antennenkabel (3) mit dem Empfänger (5) gekoppelt wird, und **durch** ein AM-Signalkompensationsmittel (15) zum Kompensieren von AM-Signalen, die an einem ersten Eingang des Kompensationsmittels (15)auftreten, **durch** an einen zweiten Eingang davon auftretende AM-Signale, wobei der erste und der zweite Eingang jeweils mit dem Antennenkabel (3) und der AM-Antenne gekoppelt sind, wobei ein Ausgang davon mit dem steuerbaren Schaltmittel (6) gekoppelt wird.

12. Empfangssystem mit Antennendiversität nach Anspruch 6 und 11, **dadurch gekennzeichnet, dass** der Ausgang des AM-Signalkompensationsmittels (15) durch den Steuersignaldetektor (16) mit dem steuerbaren Schaltmittel (6) gekoppelt wird.

13. Empfangssystem mit Antennendiversität nach Anspruch 11 oder 12, **dadurch gekennzeichnet, dass** ein AM-Verstärkungsmittel (18) zwischen die AM-Antenne und das Antennenkabel (3) geschaltet ist und ferner durch eine Inverterstufe (19) mit dem zweiten Eingang des AM-Signalkompensationsmittels (15) gekoppelt ist, wobei das AM-Signalkompensationsmittel (15) eine Addiererschaltung für eine Addition der Signale an dem ersten und zweiten Eingang des AM-Signalkompensationsmittels (15) umfasst.

14. Empfangssystem mit Antennendiversität nach Anspruch 11 oder 12, **dadurch gekennzeichnet, dass** ein AM-Verstärkungsmittel (18), das einen symmetrischen Verstärker mit einer nichtinvertierenden und einer invertierenden Ausgangsstufe umfasst, über die nichtinvertierende Ausgangsstufe zwischen die AM-Antenne und das Antennenkabel (3) und über die invertierende Ausgangsstufe mit dem zweiten Eingang des Kompensationsmittels (15) gekoppelt ist.

15. Empfangssystem mit Antennendiversität nach einem der Ansprüche 13 oder 14, **gekennzeichnet durch** erstes Hochpassfiltermittel (14), das zwischen den AM-Signalverstärker und den ersten Eingang des AM-Signalkompensationsmittels (15) gekoppelt ist, und ein zweites Hochpassfiltermittel (20), das zwischen den AM-Signalverstärker von Anspruch 14 oder die Inverterstufe (19) von Anspruch 13 und den zweiten Eingang des AM-Signalkompensationsmittels (15) gekoppelt ist, für eine Hochpassauswahl des AM-HF-Frequenzbands.

16. Empfangssystem mit Antennendiversität nach Anspruch 15, **dadurch gekennzeichnet, dass** das erste Hochpassfilter (14) zwischen die gemeinsame Verbindung des zweiten FM-Sperrfilters (13) und die zweite Induktivität gekoppelt ist.

17. Empfangssystem mit Antennendiversität nach einem der Ansprüche 11 bis 16, **dadurch gekennzeichnet, dass** die AM- und FM-Antennen jeweils eine feste vorbestimmte Antennenkurve aufweisen.

18. Empfangssystem mit Antennendiversität nach Anspruch 17, **dadurch gekennzeichnet, dass** die festen vorbestimmten Antennenkurven der FM-Antennen so gewählt werden, dass in untereinander verschiedenen Richtungen ein maximaler Antennenverstärkungsfaktor bereitgestellt wird.

19. Empfangssystem mit Antennendiversität nach Anspruch 18, **dadurch gekennzeichnet, dass** die untereinander verschiedenen Richtungen maximaler Antennenverstärkung so gewählt werden, dass ein Winkelbereich abgedeckt wird, in dem am wahrscheinlichsten ein ordnungsgemäßer Empfang eines HF-FM-Rundfunksignals auftritt.

20. Empfänger mit Mitteln, die für die Verwendung in einem Empfangssystem mit Antennendiversität nach einem der Ansprüche 1 bis 19 ausgelegt sind.

21. Antenneneinrichtung mit Mitteln, die für die Verwendung in einem Empfangssystem mit Antennendiversität nach einem der Ansprüche 1 bis 19 ausgelegt sind.

## Revendications

1. Système de réception à diversité d'antenne comprenant un dispositif d'antennes (1) incluant une pluralité d'antennes FM ainsi qu'un moyen de commutation commandable (6) pour commuter séquentiellement par l'une de ladite pluralité d'antennes FM par l'intermédiaire d'un câble d'antenne (3) sur un récepteur (5) à réception d'un signal de commande de commutation, le récepteur (5) comprenant un détecteur multitrajets (10) couplé à un générateur d'impulsions (11) pour générer un signal à impulsions à la détection d'une interférence multitrajets, **caractérisé par** un formeur d'impulsions suivant le générateur d'impulsions (11) pour convertir le signal à impulsions du générateur d'impulsions (11) en une paire de signaux à impulsions comprenant une première impulsion de signal suivie d'une deuxième impulsion de signal ayant une polarité de signal opposée à la polarité de signal de la première impulsion de signal, ladite paire de signaux à impulsions ayant une forme d'onde variant symétriquement autour d'un niveau de référence et étant délivrée par l'intermédiaire du câble d'antenne (3) au dispositif d'antennes (1).

2. Système de réception à diversité d'antenne selon la revendication 1, **caractérisé par** le signal à impulsions du générateur d'impulsions (11) ayant une forme d'onde standard substantiellement rectangulaire, variant pendant un premier transitoire de signal d'un premier niveau de signal à un deuxième niveau de signal et pendant un deuxième transitoire de signal dudit deuxième niveau de signal audit premier niveau de signal, le formeur d'impulsions comprenant un moyen de différenciation de signaux pour différencier le signal à impulsions du générateur d'impulsions (11) pour former des premier et deuxième pics d'impulsion ayant une polarité de signal mutuellement opposée apparaissant substantiellement pendant lesdits premier et deuxième transitoires de signal.

3. Système de réception à diversité d'antenne selon la revendication 2, **caractérisé par** le moyen de différenciation de signaux comprenant une première inductance (L1) couplée entre une résistance de sortie du générateur d'impulsions (11) et une tension de référence.

4. Système de réception à diversité d'antenne selon l'une des revendications 1 à 3, **caractérisé par** le formeur d'impulsions étant couplé au câble d'antenne (3) par l'intermédiaire d'un premier filtre de blocage FM (12) fournissant une suppression de signal au sein de la plage de fréquence de la bande de fréquence de diffusion RF FM.

5. Système de réception à diversité d'antenne selon la revendication 4, **caractérisé par** le premier filtre de blocage FM (12) comprenant un premier circuit LC parallèle ayant une fréquence de résonance correspondant substantiellement à la fréquence centrale au sein de la plage de fréquence de la bande de fréquence de diffusion RF FM.

6. Système de réception à diversité d'antenne selon l'une des revendications 1 à 5, **caractérisé par** le dispositif d'antennes (1) comprenant un détecteur de signaux de commande (16), une entrée de celui-ci étant couplée au câble d'antenne (3) pour délivrer à celui-ci des paires de signaux à impulsions provenant du formeur d'impulsions et une sortie de celui-ci étant couplée à une entrée de commande dudit moyen de commutation commandable (6), ledit détecteur de signaux de commande (16) comprenant un circuit de seuil délivrant un niveau de seuil et générant une impulsion de signal de commande de commutation pour le moyen de commutation commandable (6) lorsque la paire de signaux à impulsions apparaissant à l'entrée du détecteur de signaux de commande excède ledit niveau de seuil.

7. Système de réception à diversité d'antenne selon la revendication 6, **caractérisé par** le dispositif d'antennes (1) comprenant un dispositif de comptage (17) couplé entre le détecteur de signaux de commande (16) et l'entrée de commande dudit moyen de commutation commandable (6) ayant un cycle de comptage pour compter des valeurs correspondant au nombre d'antennes fixes du dispositif d'antennes (1).

8. Système de réception à diversité d'antenne selon la revendication 6 ou 7, **caractérisé en ce que** le dispositif d'antennes (1) comprend un deuxième filtre de blocage FM (13) fournissant une suppression de signal au sein de la plage de fréquence de la bande de fréquence de diffusion RF FM.

9. Système de réception à diversité d'antenne selon la revendication 8, **caractérisé par** le deuxième filtre de blocage FM (13) comprenant un deuxième circuit LC parallèle ayant une fréquence de résonance correspondant substantiellement à la fréquence centrale au sein de la plage de fréquence de la bande de fréquence de diffusion RF FM.

10. Système de réception à diversité d'antenne selon l'une des revendications 3 à 9, **caractérisé par** le dispositif d'antennes (1) comprenant une deuxième inductance (L2) étant couplée en CC par l'intermédiaire du câble d'antenne (3) en parallèle à ladite première inductance (L1), ladite deuxième inductance étant couplée entre une entrée du détecteur de signaux de commande (16) et une tension de référence de polarisation.

11. Système de réception à diversité d'antenne selon l'une des revendications 1 à 10, **caractérisé par** une antenne AM étant couplée par l'intermédiaire du câble d'antenne (3) au récepteur (5) et par un moyen de compensation (15) de signaux AM pour compenser des signaux AM apparaissant au niveau d'une première entrée dudit moyen de compensation (15) par des signaux AM apparaissant au niveau d'une deuxième entrée de celui-ci, lesdites première et deuxième entrées étant respectivement couplées au câble d'antenne (3) et à l'antenne AM, une sortie de celui-ci étant couplée audit moyen de commutation commandable (6).

12. Système de réception à diversité d'antenne selon les revendications 6 et 11, **caractérisé en ce que** la sortie du moyen de compensation (15) de signaux AM est couplée par l'intermédiaire du détecteur de signaux de commande (16) audit moyen de commutation commandable (6).

13. Système de réception à diversité d'antenne selon la revendication 11 ou 12, **caractérisé en ce qu'**un moyen d'amplification AM (18) est couplé entre ladite antenne AM et ledit câble d'antenne (3) et est en outre couplé par l'intermédiaire d'un étage d'inverseur (19) à la deuxième entrée du moyen de compensation (15) de signaux AM, le moyen de compensation (15) de signaux AM comprenant un circuit de sommateur pour une addition des signaux au niveau des première et deuxième entrées du moyen de compensation (15) de signaux AM.

14. Système de réception à diversité d'antenne selon la revendication 11 ou 12, **caractérisé en ce qu'**un moyen d'amplification AM (18) comprenant un amplificateur compensé ayant des étages de sortie non inverseuse et inverseuse, est couplé entre ladite antenne AM et ledit câble d'antenne (3) par l'intermédiaire dudit étage de sortie non inverseuse et à la deuxième entrée dudit moyen de compensation (15) par l'intermédiaire dudit étage de sortie inverseuse.

15. Système de réception à diversité d'antenne selon l'une des revendications 13 ou 14, **caractérisé par** un premier moyen de filtre passe-haut (14) couplé entre l'amplificateur de signaux AM et la première entrée du moyen de compensation (15) de signaux AM et un deuxième moyen de filtre passe-haut (20) couplé entre l'amplificateur de signaux AM selon la revendication 14 sur l'étage d'inverseur (19) selon la revendication 13 et la deuxième entrée du moyen de compensation (15) de signaux AM pour une sélection passe-haut de la bande de fréquence RF AM.

16. Système de réception à diversité d'antenne selon la revendication 15, **caractérisé en ce que** le premier moyen de filtre passe-haut (14) est couplé entre la connexion commune du deuxième filtre de blocage FM (13) et la deuxième inductance.

17. Système de réception à diversité d'antenne selon l'une des revendications 11 à 16, **caractérisé en ce que** chaque antenne AM et FM ont une caractéristique d'aire prédéterminée fixée.

18. Système de réception à diversité d'antenne selon la revendication 17, **caractérisé en ce que** les caractéristiques d'aires prédéterminées fixées des antennes FM sont choisies de façon à fournir un facteur de gain aréal maximum dans des directions mutuellement différentes.

19. Système de réception à diversité d'antenne selon la revendication 18, **caractérisé en ce que** les directions mutuellement différentes de gain aréal maximum sont choisies de façon à couvrir une aire angulaire, dans laquelle une réception appropriée d'un signal de diffusion FM RF est susceptible d'être la plus probable.

20. Récepteur comprenant un moyen adapté destiné à une utilisation dans un système de réception à diversité d'antenne selon l'une des revendications 1 à 19.

21. Dispositif d'antenne comprenant un moyen adapté destiné à une utilisation dans un système de réception à diversité d'antenne selon l'une des revendications 1 à 19.
